# EUROPÄISCHE PATENTSCHRIFT

(11) **EP 3 115 558 B1**
(45) Veröffentlichungstag und Bekanntmachung des Hinweises auf die Patenterteilung: **10.04.2019**
(21) Anmeldenummer: 16175553.3
(22) Anmeldetag: 21.06.2016
(51) Int. Cl.: F01D 9/06

(54) **LEITSCHAUFEL EINES GASTURBINENTRIEBWERKS**
GAS TURBINE ENGINE GUIDE VANE
AUBE DIRECTRICE D'UNE TURBINE À GAZ

(30) Priorität: 01.07.2015 DE 102015110615
(43) Veröffentlichungstag der Anmeldung: 11.01.2017
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Kronthaler, Wolfgang N.K.

(56) Entgegenhaltungen:
- EP-A2- 1 630 358
- EP-A2- 2 383 437
- US-A1- 2015 023 776

## Beschreibung

Die Erfindung betrifft eine Leitschaufel eines Gasturbinentriebwerks, insbesondere eines Flugtriebwerks, mit einer Kühlung von durch die Leitschaufel geführten Fluiden nach der im Oberbegriff des Patentanspruches 1 näher definierten Art sowie ein Gasturbinentriebwerk mit wenigstens einer derart ausgebildeten statischen Leitschaufel.

In Flugtriebwerken wird üblicherweise Öl als Fluid zur Schmierung und zum Kühlen von verschiedenen Triebwerkskomponenten wie Lager, Getriebe, elektrische Generatoren etc. eingesetzt. Zu Kühlzwecken werden darüber hinaus auch andere Fluide wie Chlordifluormethan oder Tetrafluorethan verwendet. Während des Betriebs des Flugtriebwerks erhitzt sich das Öl bzw. Fluid, weshalb eine effiziente Kühlung des Öls und von Öl führenden Triebwerkskomponenten wie z. B. von stromab eines Fan angeordneten Leitschaufeln erforderlich ist.

Eine herkömmliche Art der Ölkühlung stellt eine Luftkühlung dar. So wird zur Erzielung der gewünschten Kühlwirkung bei in der Praxis eingesetzten Leitschaufeln, durch die zu kühlendes Öl geführt wird, eine Oberflächenkühlung durchgeführt, wobei ein Teil der in dem zu kühlenden Öl enthaltenen Wärmeenergie über den Leitschaufelkörper an einen diesen umströmenden Luftstrom abgegeben wird.

Dabei ist eine im Betrieb permanente Oberflächenkühlung, bei der die luftumströmten Körper an Triebwerkswandungen angeordnet sind und gegebenenfalls Rippen zur Oberflächenvergrößerung und Erhöhung des Wärmeaustausches aufweisen, ebenso möglich wie eine so genannte Matrix-Kühlung mit einem meist geregelten Luftstrom, der einem Hauptströmungspfad entnommen wird.

In der US 8,616,833 B2 ist eine Leitschaufel gezeigt, die im Betrieb eines Flugtriebwerks mit zu kühlendem Öl durchströmt wird. Ein Teil der Wärmeenergie des Öls wird während des Durchströmens von dem Leitschaufelkörper aufgenommen und von diesem an einen den Leitschaufelkörper umströmenden Luftstrom abgegeben. Dies führt zu einer teilweisen Kühlung des Fluids.

Ein vergleichbares Kühlprinzip ist in der US 8,323,552 B2 realisiert. Die Leitschaufel ist hier mit Kühlkanälen versehen, durch die das zu kühlende Fluid während des Betriebs des Flugtriebwerks strömt. An der Oberfläche der Leitschaufeln sind Kühllamellen angebracht, um die Wärmeübertragung und damit die Kühlleistung von der durch das zu kühlende Fluid erwärmten Leitschaufel an den die Leitschaufel umgebenden Luftstrom zu erhöhen.

Weiterhin ist es aus der US 7,900,437 B2 bekannt, zusätzlich den Querschnitt der mit zu kühlendem Fluid durchströmten Leitungen größtmöglich zu gestalten, um eine möglichst große Menge an zu kühlendem Fluid durch die Leitschaufel hindurchleiten zu können und auf diesem Wege die Kühlleistung des Kühlsystems zu verbessern.

Nachteilig ist bei allen vorgenannten Lösungen allerdings, dass die hiermit erzielbare Kühlleistung bei modernen Getriebe-Fan-Flugtriebwerken, die auch als Geared Turbo-Fan (GTF) und Counter Rotating Open Rotors (CROR) bezeichnet werden, nicht ausreichend ist. Getriebe-Fan-Flugtriebwerken erzeugen im Betrieb erhebliche Mengen an Reibungs- und Wärmeenergie, wobei diese Wärmeenergie aus dem Flugtriebwerk abzuführen ist. Der zur Verfügung stehende Kühlluftmassenstrom zur Umströmung der Leitschaufeln wie auch die Erweiterbarkeit des Querschnitts der mit dem zu kühlenden Öl durchströmten Kanäle ist jedoch begrenzt.

Weiterhin ist aus der US 2015/0023776 A1 eine Fluidkühleinrichtung eines Gasturbinentriebwerks bekannt. Ein Nebenstromkanal ist dabei über eine innere Struktur und eine äußere Struktur definiert, wobei die innere Struktur und die äußere Struktur über Struts miteinander verbunden sind. In den Struts verlaufen Kühlkanäle, wobei ein durch den Kühlkanal strömendes Kühlfluid von den Strut umströmender Luft mittels Konvektionskühlung gekühlt wird.

Der vorliegenden Erfindung liegt daher die Aufgabe zugrunde, eine Leitschaufel eines Flugtriebwerks bereitzustellen, mittels der die Kühlleistung bzw. Kühleffizienz im Vergleich zu bekannten gekühlten Leitschaufeln verbessert wird.

Diese Aufgabe wird durch eine Leitschaufel eines Gasturbinentriebwerks, insbesondere Flugtriebwerks, mit den Merkmalen des Anspruchs 1 sowie ein Gasturbinentriebwerk gemäß Anspruch 14 gelöst.

Es wird mithin eine Leitschaufel eines Gasturbinentriebwerks, insbesondere eines Flugtriebwerks, vorgeschlagen, welche eine druckseitige Wandung, eine saugseitige Wandung, einen Leitschaufelfuß, eine Leitschaufelspitze, einen von außen von einem Kühlluftstrom eines Kühlsystems angeströmten Leitschaufelvorderkantenbereich, einen dem Leitschaufelvorderkantenbereich abgewandten Leitschaufelhinterkantenbereich und wenigstens einen in einem Innenraum der Leitschaufel angeordneten Kanal zur Führung eines zu kühlenden Fluids aufweist. Dabei ist im Betrieb des Gasturbinentriebwerks eine Außenseite der druckseitigen Wandung von einem ersten Teil des Kühlluftstroms und eine Außenseite der saugseitigen Wandung von einem zweiten Teil des Kühlluftstroms umströmt. Erfindungsgemäß ist vorgesehen, dass der Innenraum von einem dritten Teil des Kühlluftstroms durchströmt ist, wobei der Kanal mit dem zu kühlenden Fluid von dem dritten Teil des Kühlluftstroms umströmt ist.

Im Gegensatz zu den aus dem Stand der Technik bekannten Leitschaufeln, die im Betrieb eines Flugtriebwerks lediglich an ihrer druckseitigen Wandung und an ihrer saugseitige Wandung von außen von einem Kühlluftstrom nach dem Prinzip der Oberflächenkühlung umströmt werden, wird bei der vorliegenden Erfindung zusätzlich der Innenraum mit dem darin angeordneten Kanal von einem Teil des Kühlluftstroms nach dem Prinzip eines Matrix-Kühlers durchströmt.

Das Durchströmen des Innenraums der Leitschaufel hat eine deutliche Erhöhung der Kühlungsleistung zur Folge, da sowohl der mit zu kühlendem Fluid durchströmte Kanal als auch die Innenseiten der druckseitigen Wandung und der saugseitigen Wandung von dem durch das Innere der Leitschaufel geführten dritten Teil des Kühlungsstroms umströmt werden und ein großer Teil der Wärmeenergie von dem Kanal direkt auf den Kühlluftstrom übertragen werden kann.

Durch die Bereitstellung eines Innenraumes in der Leitschaufel, durch den ein Teil des Kühlluftstroms führbar ist, wird mithin die druckseitige Wandung von der saugseitigen Wandung mittels wenigstens einen Hohlraums separiert, und alle Oberflächen können zur Kühlung des Fluid führenden Kanals beitragen, womit sich eine Art Hybridkühler mit Oberflächenkühlung und Matrixkühlung ergibt.

Der Aufbau einer Leitschaufel nach der Erfindung ermöglicht es mithin, eine glatte aerodynamische Oberflächengestaltung beizubehalten, welche über eine Oberflächenkühlung neben dem inneren Wärmetausch an einer effizienten Kühlung mitwirkt. Zudem ist das Hohlraum-Design im Hinblick auf eine Gewichtsreduzierung und somit auf den Gesamtwirkungsgrad vorteilhaft.

Gemäß einer vorteilhaften Ausgestaltung der erfindungsgemäßen Leitschaufel kann zur Durchströmung des Innenraums mit dem Kühlluftstrom wenigstens eine Lufteinlassöffnung im Leitschaufelvorderkantenbereich und kann wenigstens eine Luftauslassöffnung im Leitschaufelhinterkantenbereich angeordnet sein.

Eine derartige Anordnung der Lufteinlassöffnung und der Luftauslassöffnung hat den Vorteil, dass der Kühlluftstrom eine möglichst lange Wegstrecke durch den Innenraum der Leitschaufel zurücklegt, wodurch die Wärmeaufnahme durch den Kühlluftstrom erhöht wird. Außerdem ist die Anordnung der Luftauslassöffnung im Leitschaufelhinterkantenbereich insofern von Vorteil, als dies beim Ausströmen des Kühlluftstroms aus dem Innenraum der Leitschaufel zu einer Schubgewinnung führt.

Der durch das Leitschaufelinnere geführte dritte Teil des Kühlluftstroms wird beim Durchströmen des Innenraums der Leitschaufel erwärmt. Dies hat zur Folge, dass der erwärmte Kühlluftstrom beim Austritt aus dem Innenraum der Leitschaufel durch die Luftauslassöffnung eine erhöhte Geschwindigkeit verglichen zum Eintritt in die Lufteinlassöffnung der Leitschaufel aufweist. Der hiermit aus der Wärmeenergie des zu kühlenden Fluids gewonnene Schub liefert in vorteilhafter Weise einen Beitrag zum Gesamtschub eines als Flugtriebwerk ausgebildeten Gasturbinentriebwerks.

Die Anordnung der Luftauslassöffnung im Leitschaufelhinterkantenbereich hat zudem den Vorteil, dass dies zu einer Reduzierung unerwünschter Wirbelschleppen stromabwärts des Leitschaufelhinterkantenbereichs beiträgt.

Im Zusammenhang mit der vorliegenden Erfindung kann es sich bei der genannten Lufteinlassöffnung sowohl um eine sich über einen bestimmten Abschnitt des Leitschaufelvorderkantenbereichs erstreckende einzelne Öffnung als auch um eine Mehrzahl separater Lufteinlassöffnungen handeln.

Gemäß einer vorteilhaften Ausführung der erfindungsgemäßen Leitschaufel kann im Bereich der wenigstens einen Lufteinlassöffnung eine Schutzeinrichtung vor Schadpartikeln in dem Kühlluftstrom vorgesehen sein.

Mit dem in das Gasturbinentriebwerk eintretenden Luftstrom können Schadpartikel durch den Fan bzw. Bläser hindurchgelangen und auf eine dem Bläser in Strömungsrichtung nachgeordnete Leitschaufel auftreffen. Wenn größere Partikel mit dem durch den Innenraum der Leitschaufel geführten Teil des Kühlluftstroms befördert werden, können diese gegebenenfalls einen Schaden an der Leitschaufel verursachen oder zu einem Verstopfen der Lufteinlassöffnung führen. Bei einer entsprechenden Schutzeinrichtung treffen größere Schadpartikel aufgrund ihrer Trägheit frontal auf die Schutzeinrichtung auf. Dabei können sie durch die Schutzeinrichtung in Richtung der Saugseite oder in Richtung der Druckseite der Leitschaufel abgelenkt werden, ohne Schaden an der Leitschaufel anzurichten.

Die Schutzeinrichtung kann somit zweckmäßigerweise als eine Kühlluftstromumlenkeinrichtung ausgebildet sein, mittels der der in dem Innenraum eingeleitete dritte Teil des Kühlluftstroms beim Einströmen eine Richtungsänderung erfährt.

Die Schutzeinrichtung kann ein vollintegraler Teil der statischen Auslassleitschaufelanordnung sein oder eine separate Bauteilgruppe bilden, welche z. B. über eine Steckverbindung an die Einhausung der Auslassleitschaufelanordnung angebunden sein kann.

Entsprechend einer vorteilhaften Ausgestaltung der erfindungsgemäßen Leitschaufel kann die Kühlluftstromumlenkeinrichtung mit einer Lippe ausgebildet sein, welche im Bereich des Leitschaufelvorderkantenbereichs über die wenigstens eine Lufteinlassöffnung vorkragt.

Eine solche Lippe stellt eine konstruktiv einfache Lösung dar, damit der Leitschaufelvorderkantenbereich strömungsgünstig ausgebildet ist. Mit der vorkragenden Gestaltung der Lippe kann eine einfache Aufteilung des Kühlluftstroms dahingehend bewirkt werden, dass der das Äußere der Leitschaufel umströmende erste und zweite Teil des Kühlluftstroms verlustarm an die druckseitige bzw. an die saugseitige Wandung strömt und zugleich der dritte Teil des Kühlluftstroms in den Innenraum der Leitschaufel gelangen kann.

Zusätzlich erfüllt die Lippe die oben genannte Schutzfunktion gegen das Eindringen von Schadpartikeln in das Innere der Leitschaufel.

Die Lippe kann über die wenigstens eine durch einen Abstand zwischen der druckseitigen Wandung und der saugseitigen Wandung oder vice versa bestimmte Lufteinlassöffnung derart vorkragen, dass der anströmende dritte Teil des Kühlluftstroms zwischen der Lippe und der druckseitigen Wandung mit einer im Wesentlichen der saugseitigen Wandung zugewandten Strömungsrichtung in die wenigstens eine Lufteinlassöffnung strömt.

Da in diesem Fall die Lufteinlassöffnung der Druckseite und damit dem ersten Teil des Kühlluftstroms zugewandt ist, wird der dritte Teil des Kühlluftstroms vorteilhafterweise durch den an der Druckseite herrschenden, im Vergleich zur Saugseite erhöhten Druck in den Innenraum der Leitschaufel befördert.

Grundsätzlich kann die Lippe mit der druckseitigen Wandung oder mit der saugseitigen Wandung der Leitschaufel verbunden sein oder einstückig hiermit ausgebildet sein.

Gemäß einer vorteilhaften Ausgestaltung der Erfindung kann mindesten eine Rippe im Innenraum der Leitschaufel zur Bildung des Kühlsystems angeordnet sein, wobei diese Rippe vorzugsweise mit der druckseitigen Wandung und/oder mit der saugseitigen Wandung in Kontakt ist.

Eine solche Rippe dient einerseits der Abstützung der druckseitigen Wandung und der saugseitigen Wandung zueinander und damit der Versteifung der Leitschaufel. Sind eine oder mehrere Rippen mit der druckseitigen und/oder saugseitigen Wandung verbunden, hat dies zudem den Vorteil, dass sowohl die von dem in das Leitschaufelinnere geführten dritten Teil des Kühlluftstroms umströmte Kanalaußenfläche durch die Rippen vergrößert ist, was zu einer verbesserten Wärmeübertragung von dem Kanal über die Rippen auf den Kühlluftstrom im Leitschaufelinneren führt, als auch durch den direkten Kontakt Wärme von der Rippe bzw. den Rippen an die druckseitige Wandung bzw. die saugseitige Wandung übertragen und von den jeweiligen Wandungen an den diesen an der Außenseite umströmenden ersten bzw. zweiten Teil des Kühlungsstroms abgegeben werden kann. Die mit den äußeren Wandungen verbundenen Rippen sind somit auch in die Oberflächenkühlung an den Außenseiten involviert, womit die Wärmeaustauscheffizienz erhöht wird. Zweckmäßigerweise sind die Rippen aus einem Material mit einer guten Wärmeübertragungsfähigkeit, wie beispielsweise einer Aluminium- oder Kupferlegierung, gefertigt.

Nach einer weiteren Ausgestaltung der Erfindung kann sich die mindestens eine Rippe zumindest annähernd in eine Richtung von dem Leitschaufelvorderkantenbereich zu dem Leitschaufelhinterkantenbereich erstrecken.

Somit ist zum einen gewährleistet, dass der dritte Teil des Kühlluftstroms aerodynamisch günstig durch den Innenraum der Leitschaufel geführt wird und es nicht zu unerwünschten Verwirbelungen oder Strömungsverlusten kommt. Zum anderen wird durch eine derartig angeordnete Rippe bzw. mehrere derartig angeordnete Rippen die Wärmeübertragungsfähigkeit von den erwärmten Rippen auf den durch das Leitschaufelinnere geführten Teil des Kühlluftstroms verbessert. Außerdem kann durch derart gestaltete Rippen zusätzlich der Bildung von Wirbelschleppen stromabwärts des Leitschaufelhinterkantenbereichs entgegengewirkt werden.

Bei einer vorteilhaften Ausführung der Erfindung kann die mindestens eine Rippe mit dem Kanal in Kontakt sein. Durch die unmittelbare Verbindung zwischen dem Kanal und der mindestens einen Rippe, die beispielsweise durch Verschweißen erzeugt werden kann, wird die Wärmeübertragungsfähigkeit von dem erwärmten Kanal auf die Rippe verbessert. Zudem wird bei der erfindungsgemäßen Leitschaufel die primäre Funktion der Leitschaufel, nämlich das Geraderichten des durch den stromaufwärts der Leitschaufel angeordneten Bläser verursachten Dralls, erhalten.

In einer Weiterbildung der Erfindung kann zumindest ein Teil des Kanals die mindestens eine Rippe durchgreifen. Hierdurch wird die Wärmeübertragungsfähigkeit von dem Kanal auf die mindestens eine Rippe verbessert und die Wärmeabgabe an den im Leitschaufelinneren geführten Teil des Kühlluftstroms entsprechend verbessert.

Der Kanal kann zumindest teilweise geradlinig oder zumindest teilweise gekrümmt im Innenraum der Leitschaufel angeordnet sein. Bei einer sehr vorteilhaften Ausführung der Erfindung kann der Kanal auch mäanderförmig im Innenraum der Leitschaufel angeordnet sein.

Bei mäanderförmiger Anordnung des Kanals im Innenraum der Leitschaufel kann der Kanal in einer Ebene oder gewölbt und annähernd parallel zu der gewölbten saugseitigen Wandung und/oder der gewölbten druckseitigen Wandung verlaufen. Grundsätzlich umfasst eine mäanderförmigen Gestaltung im vorliegenden Sinn jedwede schlaufenförmige oder sonstige Krümmung des Kanals mit einer beliebigen Anzahl an Windungen in alle Richtungen, wobei durch eine solche mäanderförmige Gestaltung des Kanals sowohl eine bestmögliche Führung im Innenraum der Leitschaufel als auch die Realisierung einer maximalen Außenfläche des Kanals zur Erzielung einer optimalen Wärmeübertragung von der Kanalaußenfläche an den durch das Leitschaufelinnere geführten Teil des Kühlungsstroms möglich ist.

Ein Einlass des Kanals zur Aufnahme des zu kühlenden Fluids aus einer Heißfluidleitung und ein Auslass zur Abgabe eines gekühlten Fluids an eine Kaltfluidleitung können im Bereich des Leitschaufelfußes angeordnet sein, womit sich eine in vorteilhafter Weise kompakter Bauweise des Kühlkreislauf mit der Heißfluidleitung und der Kaltfluidleitung ergibt.

Bei einer vorteilhaften Ausführung kann der Innenraum der Leitschaufel in mehrere Kammern unterteilt sein. Derartige Kammern können beispielsweise durch sich von dem Leitschaufelvorderkantenbereich zum Leitschaufelhinterkantenbereich erstreckende Rippen sowie die druckseitige und die saugseitige Wandung gebildet sein. Sind die Rippen durch den Kanal durchgriffen, sind gemeinsam mit der druckseitigen und der saugseitigen Wandung eine Vielzahl von Kammern im Innenraum der Leitschaufel ausgebildet.

Grundsätzlich sind Kammern in unterschiedlicher Größe und unterschiedlicher Geometrie möglich. Beispielsweise können mehrere Kammern auch durch bionische Strukturen im Innenraum der Leitschaufel ausgebildet sein. Diese bionischen Strukturen können z. B. aus metallischem Material bestehen und mittels eines Metall-Lasersinter-Verfahrens oder eines 3D-Druckverfahrens oder eines anderen geeigneten Verfahrens zur Bildung komplexer dreidimensionale Strukturen hergestellt sein. Derartige komplexe Strukturen, welche mehrere Kammern im Innenraum der Leitschaufel bilden, sind für eine Matrixkühlung mit hoher Kühlleistung vorteilhaft. Dabei wird der Fachmann eine Balance zwischen der minimal erforderlichen Struktur, insbesondere bei speziellen oder bionischen Formen von Rippen und Kammern, im Hinblick auf Gewicht und Strömungsverluste und der maximalen gewünschten Strukturgebung im Hinblick auf Wärmeaustausch und Strukturintegrität einhalten.

Eine gekühlte Leitschaufel nach der Erfindung kann im Nebenstromkanal des Gasturbinentriebwerks angeordnet sein. Die Anordnung im Nebenstromkanal des Gasturbinentriebwerks bringt den Vorteil mit sich, dass die Kühlleistung positiv beeinflusst wird, weil ein Großteil des Luftstroms durch den Nebenstromkanal geführt wird. Somit steht stromabwärts des Fans und stromaufwärts der Leitschaufeln im Nebenstromkanal eine große Menge an Kühlluft zur Verfügung.

Alternativ kann die Leitschaufel im Kernstromkanal des Gasturbinentriebwerks in Strömungsrichtung nach dem Fan angeordnet sein, womit eine als Einlassleitschaufel bzw. IGV (Inlet Guide Vane) bezeichnete Leitschaufel vorliegt. Durch die Anordnung der Leitschaufeln im Kernstromkanal kann eine kompakte Bauform dieser Leitschaufel realisiert werden.

Sowohl die in den Patentansprüchen angegebenen Merkmale als auch die in dem nachfolgenden Ausführungsbeispiel des erfindungsgemäßen Gegenstandes angegebenen Merkmale sind jeweils für sich allein oder in beliebiger Kombination miteinander geeignet, den erfindungsgemäßen Gegenstand weiterzubilden.

Weitere Vorteile und vorteilhafte Ausführungsformen des erfindungsgemäßen Gegenstandes ergeben sich aus den Patentansprüchen und dem nachfolgend unter Bezugnahme auf die Zeichnungen prinzipmäßig beschriebenen Ausführungsbeispiel.

Es zeigt:
- Fig. 1: eine schematische Darstellung eines als Flugtriebwerk ausgebildeten Gasturbinentriebwerks mit einer in einem Nebenstromkanal angeordneten Auslassleitschaufelanordnung (OGV) mit gemäß der Erfindung gekühlten Leitschaufeln;
- Fig. 2: eine Ansicht der Auslassleitschaufelanordnung der Fig. 1 in Alleinstellung; mehrere Leitschaufeln;
- Fig. 3: eine dreidimensionale teilweise Ansicht mehrere Leitschaufeln der Fig. 1 und Fig. 2, wobei eine druckseitige Wandung transparent dargestellt ist;
- Fig. 4: eine schematische Schnittansicht einer Leitschaufel der Fig. 1 bis Fig. 3, wobei einer Kühlluftstromführung ersichtlich ist; und
- Fig. 5: eine weitere schematische Schnittdarstellung der Leitschaufel der Fig. 4.

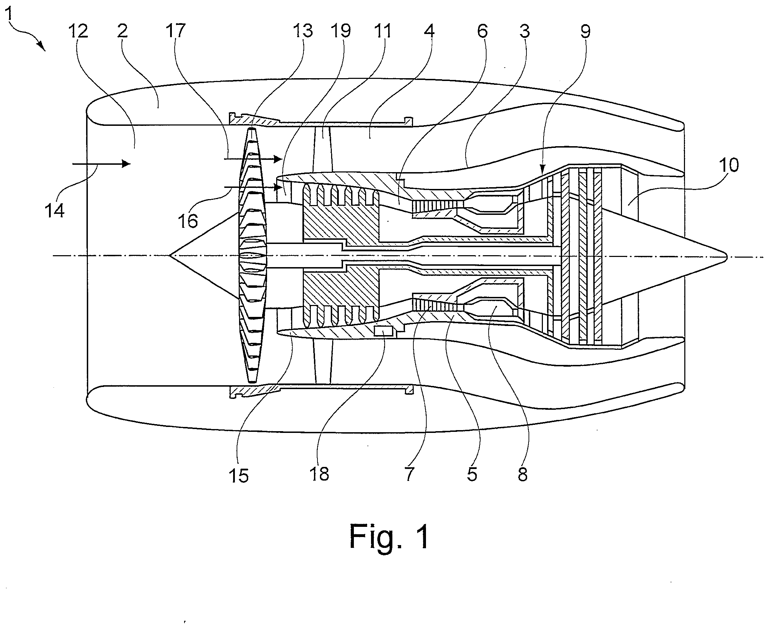

Bezug nehmend auf Fig. 1 ist schematisch ein als Flugtriebwerk 1 ausgebildetes Gasturbinentriebwerk dargestellt, welches in herkömmlicher Weise ausgebildet ist und eine Triebwerksverkleidung 2, die zusammen mit einer inneren Seitenwand 3 einen Nebenstromkanal 4 ausbildet, sowie eine innere Trennwand 5, die einen Kernstromkanal 6 radial nach außen begrenzt, aufweist. In dem Kernstromkanal 6 befinden sich Kompressoren 7, eine Brennkammer 8, eine Turbine 9 und eine Düse 10, welche sämtlich um eine zentrale Triebwerksachse A angeordnet sind.

Über einen Einlauf 12 und einen Fan 13 gelangt ein Luftstrom 14 in das Flugtriebwerk 1, der stromabwärts des Fan 13 an einem Strömungsteiler 15, von dem die innere Seitenwand 3 und die innere Trennwand 5 ausgehen, in einen Kernstrom 16 und einen Nebenstrom 17 aufgeteilt wird.

Die innere Trennwand 5 hat einen sich in Strömungsrichtung konisch erweiternden Verlauf, durch den zwischen den Kernstromkanal 6 und dem Nebenstromkanal 4 der erforderliche Raum zur Unterbringung von Aggregaten 18 wie z. B. einer Getriebebox im Inneren des Flugtriebwerks 1 geschaffen ist.

In dem Nebenstromkanal 4 ist eine Auslassleitschaufelanordnung mit mehreren auch als OGV (Outlet Guide Vane) bezeichneten Leitschaufeln 11 vorgesehen, bei denen der Nebenstrom 17 einen Kühlluftstrom 17 bildet.

Neben einer Anordnung der Leitschaufeln 11 im Nebenstromkanal 4 ist auch deren Anordnung in analoger Ausgestaltung als so genannte IGV (Inlet Guide Vane) oder Einlassleitschaufel 19 in dem Kernstromkanal 6 möglich, wobei dann der Kernstrom 16 den Kühlluftstrom bildet.

Die gezeigten Leitschaufeln 11 in dem Nebenstromkanal 4 haben keine volltragende Funktion zwischen der Triebwerksverkleidung 2 und der inneren Seitenwand 3. Sie dienen primär dem Geraderichten des stromabwärts des Fans 13 drallbehafteten Luftstroms. Eine stärker tragende Funktion wäre allerdings bei einer bionischen Innenraumstruktur möglich.

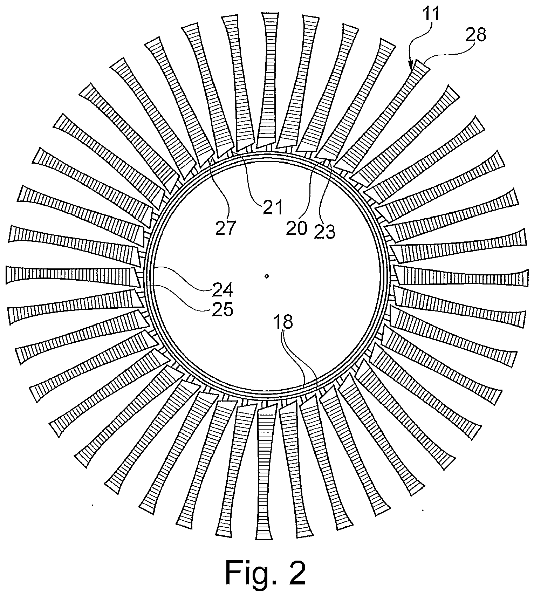

In Fig. 2 ist eine Anordnung mit mehreren in Umfangsrichtung angeordneten Leitschaufeln 11 ersichtlich, durch die ein Kanal 21 geführt ist, durch welchen ein zu kühlendes Fluid, welches hier Öl darstellt, fließt. Das Öl wird im Bereich eines radial der Triebwerksachse A zugewandten Leitschaufelfußes 27 der Leitschaufel 11 aus einer Heißfluidleitung 22 in einen Einlass 20 des Kanals 21 gespeist, hierin im Inneren in Richtung einer Leitschaufelspitze 28 und wieder zurück an einen ebenfalls im Bereich des Leitschaufelfußes 27 angeordneten Auslass 23 geführt, und gekühlt von dem Kanal 21 in eine Kaltfluidleitung 24 abgegeben.

Bei der hier gezeigten Ausführung sind die Heißfluidleitung 22 und die Kaltfluidleitung 24 mit wenigstens einem mit Öl zu versorgenden Aggregat 18, wie z. B. einer in Fig. 2 symbolisch angedeuteten Getriebebox, verbunden. Das in dem Aggregat 18 erhitzte Öl wird dabei über die Heißfluidleitung 22 von dem Aggregat 18 zu dem Einlass 20 des Kanals 21 geleitet, und nach der Kühlung in der Leitschaufel 11 von dem Kanal 21 über deren Auslass 23 und die Kaltfluidleitung 24 zurück zu dem Aggregat 18 geführt.

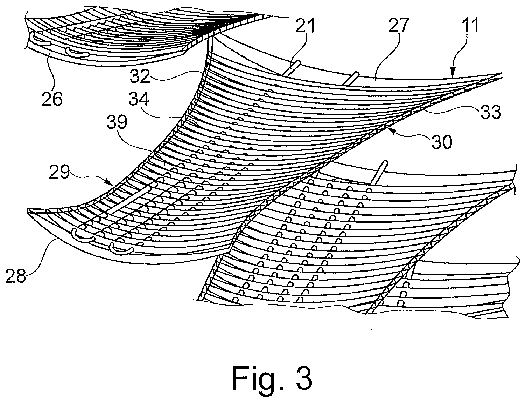

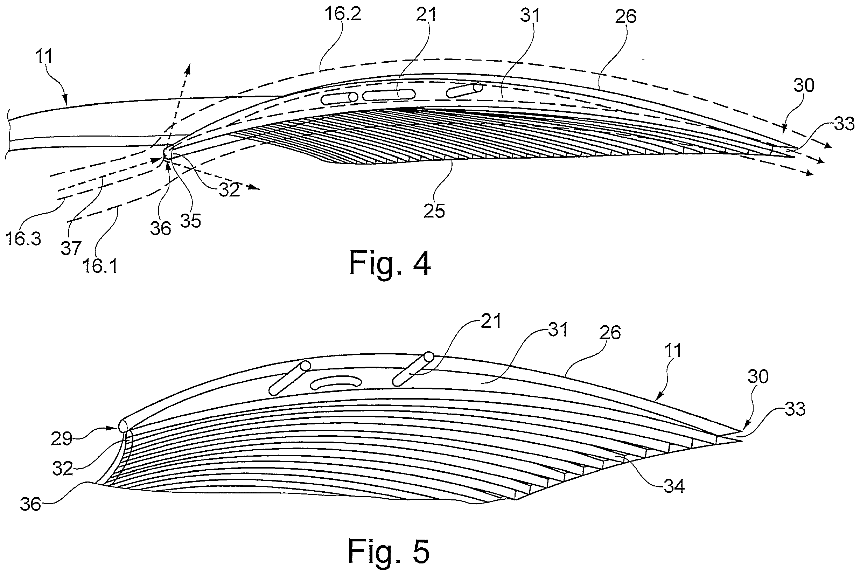

In den Fig. 3 bis Fig. 5 ist der Aufbau der gekühlten Leitschaufeln 11 veranschaulicht, welche eine druckseitige, konkav gewölbte Wandung 25, die aus Gründen der Übersichtlichkeit halber transparent dargestellt ist, und auf einer der druckseitigen Wandung 25 abgewandten Seite eine saugseitige, konvex gewölbte Wandung 26 aufweisen.

Beim Umströmen der druckseitigen Wandung 25 durch einen ersten Teil 16.1 des Kühlluftstroms 16 wird die Strömungsgeschwindigkeit dieses Teils 16.1 des Kühlluftstroms 16 relativ zu der Strömungsgeschwindigkeit, die der Kühlluftstrom 16 vor dem Umströmen der druckseitigen Wandung 25 hat, reduziert. Gleichzeitig steigt der auf die druckseitige Wandung 25 der Leitschaufel 11 wirkende Druck im ersten Teil 16.1 des Kühlluftstroms 16 an.

Die Strömungsgeschwindigkeit eines zweiten, die saugseitigen Wandung 26 der Leitschaufel 11 umströmenden Teils 16.2 des Kühlluftstroms 16 steigt hingegen beim Umströmen der saugseitigen Wandung 26 relativ zu der Strömungsgeschwindigkeit des Kühlluftstroms 16 vor dem Umströmen der saugseitigen Wandung 26 an. Mit Ansteigen der Strömungsgeschwindigkeit des zweiten Teils 16.2 des Kühlluftstroms 16 sinkt dessen Druck, womit sich ein Saugeffekt ergibt.

Zwischen dem Leitschaufelfuß 27 und der radial äußeren - bezogen auf die Triebwerksachse A - Leitschaufelspitze 28 ist die Leitschaufel 11 auf einer dem anströmenden Kühlluftstrom 16 zugewandten Seite mit einem Leitschaufelvorderkantenbereich 29 und auf der dem Leitschaufelvorderkantenbereich 29 abgewandten Seite mit einem Leitschaufelhinterkantenbereich 30 ausgebildet, zwischen denen die Leitschaufel 11 einen Hohlraum bzw. Innenraum 31 mit dem Öl führenden Kanal 21 aufweist.

Der Kühlluftstrom 16, der auf den Leitschaufelvorderkantenbereich 29 trifft, wird nicht nur in den ersten, die Außenseite der druckseitigen Wandung 25 umströmenden Teil 16.1 und den die Außenseite der saugseitigen Wandung 26 umströmenden zweiten Teil 16.2 des Kühlluftstroms 16 aufgeteilt, sondern ein Teil des Kühlluftstroms 16 wird als dritter Teil 16.3 durch mehrere Lufteinlassöffnungen 32 im Leitschaufelvorderkantenbereich 29 in den Innenraum 31 der Leitschaufel 11 geführt. Hierin umströmt der dritte Teil 16.3 des Kühlluftstroms 16 den Öl führenden Kanal 21 und alle angrenzenden Wandungen, bevor er durch mehrere Luftauslassöffnungen 33 im Leitschaufelhinterkantenbereich 30 aus der Leitschaufel 11 austritt.

Vom Leitschaufelvorderkantenbereich 29 bis zum Leitschaufelhinterkantenbereich 30 sind in Längsrichtung mehrere Rippen 34 angeordnet, die die druckseitige Wandung 25 und die saugseitige Wandung 26 gegeneinander abstützen. Der Innenraum 31 ist durch die Rippen 34 in eine Vielzahl von einzelnen Kammern 39 unterteilt, wobei die Rippen 34 durch den mäanderförmig verlaufenden Kanal 21 mehrfach durchgriffen sind.

Die durch die Lufteinlassöffnungen 32 in den Innenraum 31 der Leitschaufel 11 geführte Kühlluft strömt zwischen den Rippen 34 durch die Kammern 29 und um den zu kühlenden Kanal 21 bis zu den Luftauslassöffnungen 33, wobei die Kühlluftanströmung der Rippen 34, welche durch ihre Verbindung mit dem Kanal 21 von diesem erwärmt sind, den Kühleffekt erhöht.

Im Leitschaufelvorderkantenbereich 29 ist eine Lippe 35 angeordnet, die am Leitschaufelvorderkantenbereich 29 an der saugseitigen Wandung 26 befestigt ist über die Lufteinlassöffnungen 32 vorkragt, d.h. gewinkelt hinausragt, so dass in Strömungsrichtung des Kühlluftstroms 16 betrachtet ein die Lufteinlassöffnungen 32 aufweisender Abstand zwischen der druckseitigen Wandung 25 und der saugseitigen Wandung 26 überdeckt ist. Allerdings verbleibt auf der Druckseite ein Abstand zwischen dem vorderen Ende der Lippe 35 und der Kante der der druckseitigen Wandung 25 im Leitschaufelvorderkantenbereich 29, durch den der dritte, in den Innenraum 31 der Leitschaufel 11 einzuspeisende Teil 16.3 der Kühlluft in das Leitschaufelinnere strömen kann. Der so in den Innenraum 31 eingeleitete dritte Teil 16.3 des Kühlluftstroms 16 erfährt somit beim Einströmen eine Richtungsänderung in Richtung der Saugseite.

Die Lippe 35 bildet damit eine Kühlluftstromumlenkeinrichtung 38, welche als Schutzeinrichtung gegen Schadpartikel 37 dient. Wenn ein in dem Kühlluftstrom 16 an die Leitschaufel 11 herangeführter Schadpartikel auf die Lippe 35 trifft, wird der Schadpartikel in Richtung der Saugseite oder der Druckseite abgelenkt und tritt nicht in den Innenraum 31 der Leitschaufel 11 ein.

Wenngleich auch andere Schutzeinrichtungen vor Schadpartikeln z. B. mit einem Siebprinzip denkbar sind, zeichnet sich die Lippe 35 durch ihre einfache und wartungsfreie Konstruktion bei gleichzeitig hoher Effektivität aus.

### Bezugszeichenliste

- 1: Flugtriebwerk
- 2: Triebwerksverkleidung
- 3: innere Seitenwand
- 4: Nebenstromkanal
- 5: innere Trennwand
- 6: Kernstromkanal
- 7: Kompressoren
- 8: Brennkammer
- 9: Turbine
- 10: Düse
- 11: Leitschaufel, Outlet Guide Vane (OGV)
- 12: Einlauf
- 13: Fan
- 14: Luftstrom
- 15: Strömungsteiler
- 16: Kühlluftstrom, Kernstrom
- 16.1: erster Teil des Kühlluftstroms
- 16.2: zweiter Teil des Kühlluftstroms
- 16.3: dritter Teil des Kühlluftstroms
- 17: Kühlluftstrom, Nebenstrom
- 18: Aggregat
- 19: Leitschaufel, Inlet Guide Vane (IGV)
- 20: Einlass
- 21: Kanal
- 22: Heißfluidleitung
- 23: Auslass
- 24: Kaltfluidleitung
- 25: druckseitige Wandung
- 26: saugseitige Wandung
- 27: Leitschaufelfuß
- 28: Leitschaufelspitze
- 29: Leitschaufelvorderkantenbereich
- 30: Leitschaufelhinterkantenbereich
- 31: Innenraum
- 32: Lufteinlassöffnung
- 33: Luftauslassöffnung
- 34: Rippe
- 35: Lippe
- 36: Schutzeinrichtung, Kühlluftstromumlenkeinrichtung
- 37: Schadpartikel
- 39: Kammer
- A: zentrale Triebwerksachse

## Patentansprüche

1. Leitschaufel eines Gasturbinentriebwerks, insbesondere eines Flugtriebwerks (1), welche eine druckseitige Wandung (25), eine saugseitige Wandung (26), einen Leitschaufelfuß (27), eine Leitschaufelspitze (28), einen Leitschaufelvorderkantenbereich (29), einen dem Leitschaufelvorderkantenbereich (29) abgewandten Leitschaufelhinterkantenbereich (30) und wenigstens einen in einem Innenraum (31) der Leitschaufel (11, 19) angeordneten Kanal (21) zur Führung eines zu kühlenden Fluids aufweist, wobei im Betrieb des Gasturbinentriebwerks (1) der Leitschaufelvorderkantenbereich (29) von außen von einem Kühlluftstrom (16,17) eines Kühlsystems angeströmt ist, wobei eine Außenseite der druckseitigen Wandung (25) von einem ersten Teil (16.1) des Kühlluftstroms (16) und eine Außenseite der saugseitigen Wandung (26) von einem zweiten Teil (16.2) des Kühlluftstroms (16) umströmt ist,
**dadurch gekennzeichnet, dass**
der Innenraum (31) von einem dritten Teil (16.3) des Kühlluftstroms (16) durchströmt ist, wobei der Kanal (21) mit dem zu kühlenden Fluid von dem dritten Teil (16.3) des Kühlluftstroms (16) umströmt ist.

2. Leitschaufel nach Anspruch 1, **dadurch gekennzeichnet, dass** zur Durchströmung des Innenraums (31) mit dem Kühlluftstrom (16) wenigstens eine Lufteinlassöffnung (32) im Leitschaufelvorderkantenbereich (29) und wenigstens eine Luftauslassöffnung (33) im Leitschaufelhinterkantenbereich (30) angeordnet ist.

3. Leitschaufel nach Anspruch 2, **dadurch gekennzeichnet, dass** im Bereich der wenigstens einen Lufteinlassöffnung (32) eine Schutzeinrichtung (36) vor Schadpartikeln (37) in dem Kühlluftstrom (16) vorgesehen ist.

4. Leitschaufel nach Anspruch 3, **dadurch gekennzeichnet, dass** die Schutzeinrichtung (36) als eine Kühlluftstromumlenkeinrichtung ausgebildet ist, mittels der der in den Innenraum (31) eingeleitete dritte Teil (16.3) des Kühlluftstroms (16) beim Einströmen eine Richtungsänderung erfährt.

5. Leitschaufel nach Anspruch 4, **dadurch gekennzeichnet, dass** die Kühlluftstromumlenkeinrichtung (38) mit einer Lippe (35) ausgebildet ist, welche im Bereich des Leitschaufelvorderkantenbereichs (29) über die wenigstens eine Lufteinlassöffnung (32) vorkragt.

6. Leitschaufel nach Anspruch 5, **dadurch gekennzeichnet, dass** die Lippe (35) über die wenigstens eine durch einen Abstand zwischen der druckseitigen Wandung (25) und der saugseitigen Wandung (26) bestimmte Lufteinlassöffnung (32) derart vorkragt, dass der anströmende dritte Teil (16.3) des Kühlluftstroms (16) zwischen der Lippe (35) und der druckseitigen Wandung (25) mit einer im Wesentlichen der saugseitigen Wandung (26) zugewandten Strömungsrichtung in die wenigstens eine Lufteinlassöffnung (32) strömt.

7. Leitschaufel nach einem der Ansprüche 1 bis 6, **dadurch gekennzeichnet, dass** zur Bildung des Kühlsystems mindestens eine Rippe (34) im Innenraum (31) der Leitschaufel (11, 19) angeordnet ist, welche vorzugsweise mit der druckseitigen Wandung (25) und/oder mit der saugseitigen Wandung (26) in Kontakt ist.

8. Leitschaufel nach Anspruch 7, **dadurch gekennzeichnet, dass** sich die mindestens eine Rippe (34) zumindest annähernd in einer Richtung von dem Leitschaufelvorderkantenbereich (29) zu dem Leitschaufelhinterkantenbereich (30) erstreckt.

9. Leitschaufel nach einem der Ansprüche 7 oder 8, **dadurch gekennzeichnet, dass** die mindestens eine Rippe (34) mit dem Kanal (21) in Kontakt ist.

10. Leitschaufel nach einem der Ansprüche 7 bis 9, **dadurch gekennzeichnet, dass** zumindest ein Teil des Kanals (21) die mindestens eine Rippe (34) durchgreift.

11. Leitschaufel nach einem der Ansprüche 1 bis 10, **dadurch gekennzeichnet, dass** der Kanal (21) mäanderförmig im Innenraum (31) der Leitschaufel (11, 19) angeordnet ist.

12. Leitschaufel nach einem der Ansprüche 1 bis 11, **dadurch gekennzeichnet, dass** ein Einlass (20) des Kanals (21) zur Aufnahme des zu kühlenden Fluids aus einer Heißfluidleitung (22) und ein Auslass (23) zur Abgabe eines gekühlten Fluids an eine Kaltfluidleitung (24) im Bereich des Leitschaufelfußes (27) angeordnet sind.

13. Leitschaufel nach einem der Ansprüche 1 bis 12, **dadurch gekennzeichnet, dass** der Innenraum (31) der Leitschaufel (11, 19) in mehrere Kammern (39) unterteilt ist.

14. Gasturbinentriebwerk, insbesondere Flugtriebwerk, mit wenigstens einer statischen Leitschaufel nach einem der Ansprüche 1 bis 13, **dadurch gekennzeichnet, dass** die wenigstens eine Leitschaufel (11) in einem Nebenstromkanal (4) oder einem Kernstromkanal (6) des Gasturbinentriebwerks (1) angeordnet ist.

## Claims

1. Guide vane of a gas turbine engine, in particular of an aircraft engine (1), which has a pressure-side wall (25), a suction-side wall (26), a guide vane root (27), a guide vane tip (28), a guide vane leading edge area (29), a guide vane trailing edge area (30) that is facing away from the guide vane leading edge area (29), and at least one channel (21) for conducting a fluid to be cooled arranged in an internal space (31) of the guide vane (11, 19), wherein during operation of the gas turbine engine (1) a cooling air flow (16, 17) of a cooling system impinges on the guide vane leading edge area (29) from the outside, wherein a first part (16.1) of the cooling air flow (16) flows around an outer side of the pressure-side wall (25), and a second part (16.2) of the cooling air flow (16) flows around an outer side of the suction-side wall (26), **characterized in that** a third part (16.3) of the cooling air flow (16) flows through the internal space (31), wherein the third part (16.3) of the cooling air flow (16) flows around the channel (21) with the fluid to be cooled.

2. Guide vane according to claim 1, **characterized in that** at least one air inlet opening (32) is arranged in the guide vane leading edge area (29) and at least one air outlet opening (33) is arranged in the guide vane trailing edge area (30) to provide that the cooling air flow (16) flows through the internal space (31).

3. Guide vane according to claim 2, **characterized in that** a protective device (36) against harmful particles (37) in the cooling air flow (16) is provided in the area of the at least one air inlet opening (32).

4. Guide vane according to claim 3, **characterized in that** the protective device (36) is formed as a cooling air flow diverting appliance, by means of which the third part (16.3) of the cooling air flow (16) that is introduced into the internal space (31) is changed in its direction as it flows in.

5. Guide vane according to claim 4, **characterized in that** the cooling air flow diverting appliance (38) is formed with a lip (35), which protrudes over the at least one air inlet opening (32) in the area of the guide vane leading edge area (29).

6. Guide vane according to claim 5, **characterized in that** the lip (35) protrudes over the at least one air inlet opening (32) that is determined by a distance between the pressure-side wall (25) and the suction-side wall (26), namely in such a manner that the inflowing third part (16.3) of the cooling air flow (16) flows between the lip (35) and the pressure-side wall (25) with a flow direction that is substantially oriented towards the suction-side wall (26) into the at least one air inlet opening (32).

7. Guide vane according to one of the claims 1 to 6, **characterized in that**, for forming the cooling system, at least one rib (34) is arranged in the internal space (31) of the guide vane (11, 19), which is preferably in contact with the pressure-side wall (25) and/or with the suction-side wall (26).

8. Guide vane according to claim 7, **characterized in that** the at least one rib (34) extends at least approximately in a direction from the guide vane leading edge area (29) to the guide vane trailing edge area (30).

9. Guide vane according to one of the claims 7 or 8, **characterized in that** the at least one rib (34) is in contact with the channel (21).

10. Guide vane according to one of the claims 7 to 9, **characterized in that** at least a part of the channel (21) passes through the at least one rib (34).

11. Guide vane according to one of the claims 1 to 10, **characterized in that** the channel (21) is arranged in a meandering shape in the internal space (31) of the guide vane (11, 19).

12. Guide vane according to one of the claims 1 to 11, **characterized in that** an inlet (20) of the channel (21) for taking in the fluid to be cooled from a hot fluid conduit (22), and an outlet (23) for the discharge of a cooled fluid into a cold fluid conduit (24) are arranged in the area of the guide vane root (27).

13. Guide vane according to one of the claims 1 to 12, **characterized in that** the internal space (31) of the guide vane (11, 19) is divided into multiple chambers (39).

14. Gas turbine engine, in particular aircraft engine, with at least one static guide vane according to one of the claims 1 to 13, **characterized in that** the at least one guide vane (11) is arranged in a bypass channel (4) or a core flow channel (6) of the gas turbine engine (1).

## Revendications

1. Aube directrice d'un moteur à turbine à gaz, en particulier d'un moteur d'avion (1), qui présente une paroi côté pression (25), une paroi côté aspiration (26), une emplanture d'aube directrice (27), une pointe d'aube directrice (28), une région d'arête avant d'aube directrice (29), une région d'arête arrière d'aube directrice (30) opposée à la région d'arête avant d'aube directrice (29) et au moins un canal (21) pour conduire un fluide à refroidir disposé dans un espace interne (31) de l'aube directrice (11, 19), la région d'arête avant d'aube directrice (29), pendant le fonctionnement du moteur à turbine à gaz (1), étant frappée depuis l'extérieur par un flux d'air de refroidissement (16, 17) d'un système de refroidissement, un côté extérieur de la paroi côté pression (25) étant enveloppé par une première partie (16.1) du flux d'air de refroidissement (16) et un côté extérieur de la paroi côté aspiration (26) étant enveloppé par une deuxième partie (16.2) du flux d'air de refroidissement (16),
**caractérisée en ce que** l'espace interne (31) est parcouru par une troisième partie (16.3) du flux d'air de refroidissement (16), le canal (21) avec le fluide à refroidir étant enveloppé par la troisième partie (16.3) du flux d'air de refroidissement (16).

2. Aube directrice selon la revendication 1, **caractérisée en ce que** pour l'écoulement du fluide d'air de refroidissement (16) à travers l'espace interne (31), au moins une ouverture d'entrée d'air (32) est disposée dans la région d'arête avant d'aube directrice (29) et au moins une ouverture de sortie d'air (33) est disposée dans la région d'arête arrière d'aube directrice (30).

3. Aube directrice selon la revendication 2, **caractérisée en ce que** dans la région de l'au moins une ouverture d'entrée d'air (32) un dispositif de protection (36) contre les particules nocives (37) est prévu dans le flux d'air de refroidissement (16).

4. Aube directrice selon la revendication 3, **caractérisée en ce que** le dispositif de protection (36) est réalisé sous forme de dispositif de déviation du flux d'air de refroidissement au moyen duquel la troisième partie (16.3) du flux d'air de refroidissement (16) introduite dans l'espace interne (31) subit une variation de direction lors de l'afflux.

5. Aube directrice selon la revendication 4, **caractérisée en ce que** le dispositif de déviation du flux d'air de refroidissement (38) est réalisé avec une lèvre (35) qui fait saillie dans la région de l'arête avant d'aube directrice (29) au-dessus de l'au moins une ouverture d'entrée d'air (32).

6. Aube directrice selon la revendication 5, **caractérisée en ce que** la lèvre (35) fait saillie au-delà de l'au moins une ouverture d'entrée d'air (32) définie par une distance entre la paroi côté pression (25) et la paroi côté aspiration (26) de telle sorte que la troisième partie d'afflux (16.3) du flux d'air de refroidissement (16) entre la lèvre (35) et la paroi côté pression (25) s'écoule avec une direction d'écoulement tournée essentiellement vers la paroi côté aspiration (26) dans l'au moins une ouverture d'entrée d'air (32).

7. Aube directrice selon l'une quelconque des revendications 1 à 6, **caractérisée en ce que** pour former le système de refroidissement, au moins une ailette (34) est disposée dans l'espace interne (31) de l'aube directrice (11, 19), laquelle est de préférence en contact avec la paroi côté pression (25) et/ou avec la paroi côté aspiration (26).

8. Aube directrice selon la revendication 7, **caractérisée en ce que** l'au moins une ailette (34) s'étend au moins approximativement dans une direction allant de la région d'arête avant d'aube directrice (29) à la région d'arête arrière d'aube directrice (30).

9. Aube directrice selon l'une quelconque des revendications 7 ou 8, **caractérisée en ce que** l'au moins une ailette (34) est en contact avec le canal (21).

10. Aube directrice selon l'une quelconque des revendications 7 à 9, **caractérisée en ce qu'**au moins une partie du canal (21) s'engage à travers l'au moins une ailette (34).

11. Aube directrice selon l'une quelconque des revendications 1 à 10, **caractérisée en ce que** le canal (21) est disposé en forme de méandres dans l'espace interne (31) de l'aube directrice (11, 19).

12. Aube directrice selon l'une quelconque des revendications 1 à 11, **caractérisée en ce qu'**une entrée (20) du canal (21) pour recevoir le fluide à refroidir depuis une conduite de fluide chaud (22) et une sortie (23) pour délivrer un fluide refroidi à une conduite de fluide froid (24) sont disposées dans la région de l'emplanture d'aube directrice (27).

13. Aube directrice selon l'une quelconque des revendications 1 à 12, **caractérisée en ce que** l'espace interne (31) de l'aube directrice (11, 19) est divisé en plusieurs chambres (39).

14. Moteur à turbine à gaz, en particulier moteur d'avion, comprenant au moins une aube directrice statique selon l'une quelconque des revendications 1 à 13, **caractérisé en ce que** l'au moins une aube directrice (11) est disposée dans un canal de flux secondaire (4) ou un canal de flux principal (6) du moteur à turbine à gaz (1).
